# EUROPEAN PATENT APPLICATION

(11) **EP 4 772 989 A1**
(43) Date of publication of application: **08.07.2026**
(21) Application number: 24858321.3
(22) Date of filing: 15.08.2024
(51) Int. Cl.: G06F 3/04886

(54) **REGION SEGMENTATION METHOD AND APPARATUS, AND CONTROL DEVICE AND STORAGE MEDIUM**

(30) Priority: 28.08.2023 CN 202311092106
(71) Applicant: Qfeeltech (Beijing) Co., Ltd., Beijing 100191 (CN)
(72) Inventor: LIU, Zhanglin, Beijing 100191 (CN); ZHU, Rui, Beijing 100191 (CN)
(74) Representative: Carpmaels & Ransford LLP
(86) International application number: PCT/CN2024/112227
(87) International publication number: WO 2025/044778

(57) **Abstract**

The present disclosure provides a region segmentation method and device, a control apparatus, and a storage medium. The method comprises: a displaying step for displaying a graphical representation of a map including an operable area on a screen; a drawing step for executing a drawing operation for drawing a target line in response to detecting a touch operation of a user on the screen, wherein the target line passes through the operable area and is fixed, and the drawing operation comprises: drawing the target line based on the touch operation with a start point of the touch operation as a start point and an end point of the touch operation as an end point, wherein the target line is fixed in response to an end of the touch operation; and a dividing step for dividing the operable area based on the target line. Thus, the method improves the convenience and intuitiveness of operation without being limited by an area shape, thereby enabling region segmentation even for areas with irregular shapes such as rooms.

## Description

### TECHNICAL FIELD

The present disclosure relates to the field of smart home technologies, and in particular, to an region segmentation method and device, a control apparatus, and a storage medium.

### BACKGROUND

Performing region segmentation (also referred to herein as "area dividing") such as room dividing on a map of an autonomous mobile apparatus is a very common operation, and it is necessary to divide the map into a plurality of parts according to shapes of rooms, etc., wherein corresponding processing may be performed on at least one of the plurality of parts.

In the related art, region segmentation is performed by forming a polygon on a map using an intersection of a plurality of rectangles. However, it may be difficult to cover rooms with irregular shapes and not intuitive.

### SUMMARY

A purpose of the present disclosure is to overcome or at least alleviate the defects in the prior art, and provide a region segmentation method and device, a control apparatus and a storage medium that can implement region segmentation even for rooms with irregular shapes.

According to a first aspect of the present disclosure, there is provided a region segmentation method applied to a control apparatus, the method comprising: a displaying step for displaying a graphical representation of a map including an operable area on a screen; a drawing step for executing a drawing operation for drawing a target line in response to detecting a touch operation of a user on the screen, wherein the target line passes through the operable area (also referred to herein as "operable region") and is fixed, and the drawing operation comprises: drawing the target line based on the touch operation with a start point of the touch operation as a start point and an end point of the touch operation as an end point, wherein the target line is fixed in response to an end of the touch operation; and a dividing step for dividing the operable area based on the target line.

According to a second aspect of the present disclosure, there is provided a region segmentation method applied to a control apparatus, the method comprising: a displaying step for displaying a graphical representation of a map including an operable area on a screen; a drawing step for executing a drawing operation for drawing at least three different target lines in response to detecting at least three touch operations of a user on the screen, wherein each of the target lines is located in the operable area and is fixed, and the drawing operation comprises: for each touch operation of the at least three touch operations, drawing a target line based on the touch operation with a start point of the touch operation as a start point and an end point of the touch operation as an end point, so as to draw target lines the number of which is the same as the number of the detected touch operations, wherein the target line drawn based on each touch operation is fixed in response to the end of the touch operation; and a dividing step for dividing the operable area based on at least three drawn target lines.

According to a third aspect of the present disclosure, there is provided a region segmentation device applied to a control apparatus, the device comprising: a displaying unit configured to display a graphical representation of a map including an operable area on a screen; a drawing unit configured to execute a drawing operation for drawing a target line in response to detecting a touch operation of a user on the screen, wherein the target line passes through the operable area and is fixed, and the drawing operation comprises: drawing the target line based on the touch operation with a start point of the touch operation as a start point and an end point of the touch operation as an end point, wherein the target line is fixed in response to an end of the touch operation; and a dividing unit configured to divide the operable area based on the target line.

According to a fourth aspect of the present disclosure, there is provided a region segmentation device applied to a control apparatus, the device comprising: a displaying unit configured to display a graphical representation of a map including an operable area on a screen; a drawing unit configured to execute a drawing operation for drawing at least three different target lines in response to detecting at least three touch operations of a user on the screen, wherein each of the target lines is located in the operable area and is fixed, and the drawing operation comprises: for each touch operation of the at least three touch operations, drawing a target line based on the touch operation with a start point of the touch operation as a start point and an end point of the touch operation as an end point, so as to draw target lines the number of which is the same as the number of the detected touch operations, wherein the target line drawn based on each touch operation is fixed in response to the end of the touch operation; and a dividing unit configured to divide the operable area based on at least three drawn target lines.

According to a fifth aspect of the present disclosure, there is provided a region segmentation device applied to a control apparatus, the device comprising: a processor; and a memory for storing processor-executable instructions, wherein the processor is configured to implement the above region segmentation method when executing the instructions stored in the memory.

According to a sixth aspect of the present disclosure, there is provided a control apparatus comprising: a screen and the above-mentioned region segmentation device.

According to a seventh aspect of the present disclosure, there is provided a non-transitory computer-readable storage medium having computer program instructions stored thereon, wherein the computer program instructions, when executed by a processor, implement the above region segmentation method.

Compared with the prior art in which region segmentation is performed by forming a polygon using an intersection of a plurality of rectangles, in the technical solution of the present disclosure, region segmentation is implemented by arbitrarily drawing a line on a map in response to a touch operation of a user on a screen, which can improve the convenience and intuitiveness of the operation without being limited by an area shape (also referred to herein as "region shape"), thereby enabling region segmentation even for areas or regions (such as rooms) with irregular shapes.

Other features and aspects of the present disclosure will become apparent from the following detailed description of exemplary implementations with reference to the accompanying drawings.

### BRIEF DESCRIPTION OF THE DRAWINGS

The accompanying drawings, which are incorporated in and constitute a part of this specification, illustrate exemplary implementations, features, and aspects of the present disclosure together with the description, and serve to explain the principles of the disclosure.
FIG. 1 shows a typical environment including an autonomous mobile apparatus and a control apparatus.
FIG. 2 shows a flowchart of a region segmentation method applied to a control apparatus according to an exemplary implementation.
FIG. 3 shows a schematic diagram of a graphical representation of a map including an operable area displayed on a screen of a control apparatus according to an exemplary implementation.
FIG. 4 shows a schematic diagram of drawing a target line passing through an operable area on a screen of a control apparatus according to an exemplary implementation.
FIG. 5 shows a schematic diagram of drawing two target lines passing through an operable area on a screen of a control apparatus according to an exemplary implementation.
FIG. 6 shows a schematic diagram of any adjustment of a target line during the execution of a drawing operation according to an exemplary implementation.
FIG. 7 shows a schematic diagram of fixing a target line in response to an end of a touch operation according to an exemplary implementation.
FIG. 8(a), FIG. 8(b), and FIG. 8(c) are schematic diagrams of adjusting a drawn target line to a new target line that does not pass through an obstacle according to an exemplary implementation.
FIG. 9 shows a schematic diagram of dividing an operable area based on a target line according to an exemplary implementation.
FIG. 10 shows a schematic diagram of an application scenario of a region segmentation method applied to a control apparatus according to another exemplary implementation.
FIG. 11 shows a flowchart of a region segmentation method applied to a control apparatus according to another exemplary implementation.
FIG. 12 shows a block diagram of a region segmentation device according to an exemplary implementation.
FIG. 13 shows a block diagram of a region segmentation device according to an exemplary implementation.

### DETAILED DESCRIPTION

Various exemplary implementations, features and aspects of the present disclosure will be described in detail below with reference to the accompanying drawings. The same reference numbers in the drawings indicate functionally the same or similar elements. While the various aspects of the implementations are presented in drawings, the drawings are not necessarily drawn to scale unless specifically indicated.

The word "exemplary" used exclusively herein means "serving as an example, implementation, or illustration". Any implementation described herein as "exemplary" is not necessarily to be construed as preferred or advantageous over other implementations.

In addition, in order to better illustrate the present disclosure, numerous specific details are given in the following specific implementations. It will be understood by those skilled in the art that the present disclosure may be practiced even without some of the specific details. In some examples, methods, means, elements, and circuits well known to those skilled in the art are not described in detail, so as to highlight the subject matter of the present disclosure.

The autonomous mobile apparatus refers to an intelligent mobile apparatus that executes a predetermined task in a set area or region, and includes but is not limited to: a cleaning robot, such as an intelligent cleaning machine, an intelligent mopping machine, a window cleaning robot, and the like; a logistics robot, a carrying robot, and the like; a weeding robot, a scooping robot, and the like; a companion type mobile robot, such as an intelligent electronic pet, a babysitter robot; a service type mobile robot, such as a reception robot at a hotel, a lodge, or a meeting place; an industrial inspection intelligent apparatus, such as a power inspection robot, a smart forklift, and the like; and a security robot, such as a household or commercial security guard robot. It should be noted that the autonomous mobile apparatus is not limited to those mentioned above, and any apparatus with an autonomous mobile function should belong to the autonomous mobile apparatus described in this implementation.

An autonomous mobile apparatus usually moves autonomously in a limited space, for example, a cleaning robot or a companion type mobile robot usually runs indoors, and a service type mobile robot usually runs in a specific limited space such as a lodge or a conference site. This limited space may be referred to as a working area or working region of the autonomous mobile apparatus. Currently, an autonomous mobile apparatus can obtain a location of an obstacle by sensing environment information, to establish a map of running space of the autonomous mobile apparatus, where the map includes at least information about various types of obstacles in an environment, for example, a location-on-map of the obstacle, that is, the location-on-map on the map to which an actual location of the obstacle in a working area is mapped. The map further includes at least one operable area representing a working area on which the autonomous mobile apparatus can perform cleaning and other processing, and the working area is, for example, a plurality of areas or regions divided by walls, doors, and other partitions, such as a plurality of rooms. Dividing (also referred to herein as "segmenting") an operable area on a map of an autonomous mobile apparatus is a very common operation, and the map needs to be divided into a plurality of parts according to shapes of rooms or the like or according to actual needs of a user, so as to formulate a cleaning plan for one or more of the plurality of parts and perform cleaning according to the plan.

In the prior art, areas or regions such as rooms are divided (also referred to herein as "segmented") by forming a polygon using an intersection of a plurality of rectangles on a map, however, with this method, it may be difficult to cover rooms with irregular shapes and it is not intuitive.

In view of this, the present disclosure provides a region segmentation method applied to a control apparatus, the method comprising: a displaying step for displaying a graphical representation of a map including an operable area on a screen; a drawing step for executing a drawing operation for drawing a target line in response to detecting a touch operation of a user on the screen, wherein the target line passes through the operable area and is fixed, and the drawing operation comprises: drawing the target line based on the touch operation with a start point of the touch operation as a start point and an end point of the touch operation as an end point, wherein the target line is fixed in response to an end of the touch operation; and a dividing step for dividing the operable area based on the target line.

In addition, the present disclosure further provides a region segmentation method applied to a control apparatus, the method comprising: a displaying step for displaying a graphical representation of a map including an operable area on a screen; a drawing step for executing a drawing operation for drawing at least three different target lines in response to detecting at least three touch operations of a user on the screen, wherein each of the target lines is located in the operable area and is fixed, and the drawing operation comprises: for each touch operation of the at least three touch operations, drawing a target line based on the touch operation with a start point of the touch operation as a start point and an end point of the touch operation as an end point, so as to draw target lines the number of which is the same as the number of the detected touch operations, wherein the target line drawn based on each touch operation is fixed in response to the end of the touch operation; and a dividing step for dividing the operable area based on at least three drawn target lines.

Compared with the prior art in which region segmentation is performed by forming a polygon using an intersection of a plurality of rectangles, the technical solution of the present disclosure implements region segmentation by drawing a line arbitrarily on a map in response to a touch operation of a user on a screen, which can improve the convenience and intuitiveness of the operation without being limited by the area shape, thereby solving the technical problem described above.

In the following exemplary implementations, the control apparatus controlling the sweeper is taken as an example for description, but those skilled in the art can understand that the solution of the present disclosure can also be applied to the control apparatus controlling other autonomous mobile apparatuses such as mopping machines that need to divide an operable area such as a map.

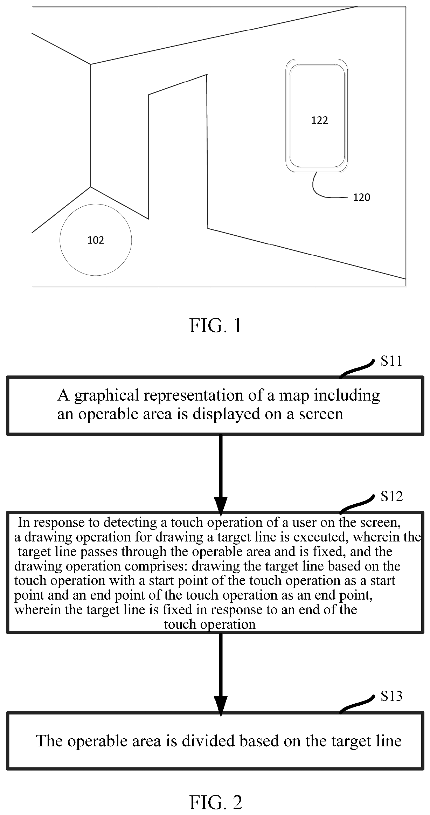

Referring to FIG. 1, the region segmentation system may include an autonomous mobile apparatus 102 and a control apparatus 120 that can communicate with each other, and it should be understood that the control apparatus 120 is configured to control the autonomous mobile apparatus 102, for example, the control apparatus 120 may send a corresponding instruction to the autonomous mobile apparatus 102, so that the autonomous mobile apparatus 102 performs processing corresponding to the instruction. It may be understood that the control apparatus 120 is a terminal apparatus of the autonomous mobile apparatus 102, and the autonomous mobile apparatus 102 is controlled by the terminal apparatus.

The control apparatus 120 may include a mobile computing device or a portable computing device such as a cellular phone, a smart phone, a personal digital assistant, a tablet computer, a smart watch, or a laptop computer, or may include a non-mobile computing device or a non-portable computing device such as a desktop computer.

As shown in FIG. 1, the control apparatus 120 is provided with a screen 122 (also referred to as a display), and in a possible implementation, the screen 122 may include a touch screen having both a touch input function and a display function. The user may input corresponding information on the screen 122, of course, the corresponding information may also be displayed on the screen 122 for the user to process, and thus, the user may interact with the control apparatus 120 in a friendly manner via the screen 122. For example, information related to training, cleaning, and the like of the autonomous mobile apparatus 102, such as a map, may be displayed on the screen 122. Exemplary implementations of the present disclosure are described below with reference to Implementation 1 and Implementation 2.

### Implementation 1:

Referring to FIG. 2, the region segmentation method of the exemplary implementation includes the following steps:
In step S11 (displaying step), a graphical representation of a map including an operable area is displayed on a screen.

In this exemplary implementation, since the screen displays pixels, the map displayed on the screen is actually a pixel map. The autonomous mobile apparatus has executed a work task on a certain workspace (for example, the autonomous mobile apparatus has executed a cleaning task), and during the execution of the work task, the autonomous mobile apparatus established and stored an initial pixel map of the workspace (for example, stored the initial pixel map of the workspace in its own storage unit), so that when the autonomous mobile apparatus executes a subsequent work task on the same workspace, the autonomous mobile apparatus can directly obtain the pixel map from its own storage unit. Alternatively, the autonomous mobile apparatus may obtain the pixel map above from a storage unit of another autonomous mobile apparatus storing the pixel map or from a server storing the pixel map through a network.

After pre-acquiring the pixel map of the workspace, the autonomous mobile apparatus may first partition the pixel map to split an area corresponding to the pixel map into at least one sub-area (i.e., an operable area) to obtain an area pixel map (also referred to herein as "region pixel map"). It should be understood that the area corresponding to the pixel map may be automatically partitioned or manually partitioned, and those skilled in the art may use any suitable method in the prior art to automatically partition or manually partition, which is limited by space and will not be specifically described in the present disclosure.

Therefore, the autonomous mobile apparatus 102 may obtain the area pixel map, and thus the area pixel map may be obtained from the autonomous mobile apparatus 102. After the area pixel map is obtained, a graphical representation of the obtained area pixel map may be displayed on the screen 122.

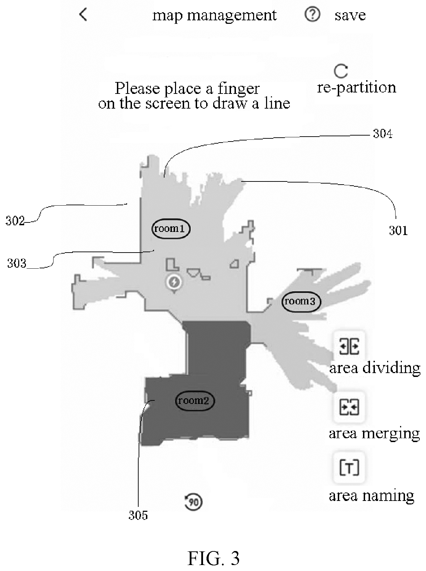

For example, referring to FIG. 3, the graphical representation 301 includes operable areas 304 and 305, the operable areas 304 and 305 are, for example, a room 1 and a room 2, and a wall 302 of the room and an obstacle 303 in the room are marked in the graphical representation 301, where the obstacle 303 is, for example, a garbage can, an end table, a dining table, a sofa, a refrigerator, and the like. Those skilled in the art can understand that although FIG. 3 shows two operable areas 304 and 305, the present disclosure does not specifically limit the number of operable areas in the map, for example, the map may include only one operable area, and for another example, the map may include more than three operable areas.

After the graphical representation is displayed on the screen, the following step S12 is continued.

In step S12 (drawing step), in response to detecting a touch operation of a user on the screen 122, a drawing operation for drawing a target line is executed, wherein the target line passes through the operable area and is fixed, and the drawing operation comprises: drawing the target line based on the touch operation with a start point of the touch operation as a start point and an end point of the touch operation as an end point, wherein the target line is fixed in response to an end of the touch operation. That the target line is fixed indicates that the target line cannot be selected and adjusted, and adjustment includes but is not limited to moving, rotating, and the like the target line.

In this implementation, the user may touch the screen displaying the graphical representation at any suitable time and in any suitable manner in the prior art, in other words, the present disclosure does not specifically limit the manner and timing of the touch.

In a possible implementation, guide information used to guide the user to perform a touch operation on the screen on which the graphical representation is displayed may be displayed on the screen, and when catching the guide information, the user performs the touch operation on the screen on which the graphical representation is displayed. Therefore, the time for region segmentation of the present disclosure can be appropriately reduced. For example, the guidance information may include but is not limited to text information such as "Please place a finger on a screen to draw a line".

In another possible implementation, no prompt is provided regardless of an elapsed time period since the graphical representation is displayed on the screen, but waiting for the user to autonomously perform a touch operation on the screen on which the graphical representation is displayed. Therefore, information to be displayed on the screen can be reduced, so that the screen looks more concise.

In this exemplary implementation, whether the user performs the touch operation on the screen on which the graphical representation is displayed may be detected in any suitable detection manner according to actual application scenarios and requirements, for example, whether the user performs the touch operation on the screen on which the graphical representation is displayed may be detected via a tactile sensor, and the present disclosure does not describe the detection manner of the touch operation in detail.

In a possible implementation, when a touch operation of the user on the screen on which the graphical representation is displayed is detected, the target line may be drawn along a touch track corresponding to the touch operation, wherein the touch track extends from outside the operable area (for example, a room) to inside the operable area until the touch track passes through the operable area and reaches outside the operable area. In a first possible implementation, the start point and the end point of the touch operation may be located at two different location points outside the operable area; in a second possible implementation, the start point and the end point of the touch operation may be located at corresponding location points on two boundaries of the operable area; and in a third possible implementation, one of the start point and the end point of the touch operation is located at a location point outside the operable area and the other is located at a corresponding location point on a boundary of the operable area. It should be understood that the present disclosure does not specifically limit the locations of the start point and the end point of the touch operation, as long as the touch track formed by connecting the start point and the end point can pass through the operable area.

Correspondingly, the start point of the drawn target line is the start point of the touch track, the end point of the target line is the end point of the touch track, and the contour of the target line coincides with the contour of the touch track. Since the touch track passes through the operable area, the target line naturally also passes through the operable area.

It should be understood that if the drawn target line does not pass through the operable area, the target line is considered invalid. Optionally, the invalid target line may be automatically deleted, and the user is prompted to re-perform a touch operation on the screen on which the graphical representation is displayed, to re-draw a new target line.

When the user ends the touch operation, for example, the user lifts a finger from the screen on which the graphical representation is displayed, drawing of the target line is completed, and in this case, the drawn target line may be fixed.

In this exemplary implementation, the target line being fixed means that the target line cannot be selected and adjusted.

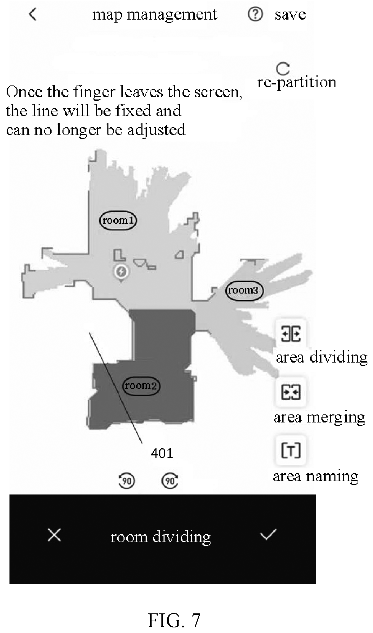

As an example, as shown in FIG. 7, in response to the end of the touch operation, for example, the finger of the user leaves the screen, the drawn target line 401 is fixed and cannot be adjusted again, which means that the user cannot adjust the location (such as the start location of the target line 401), shape, and angle relative to the map, etc. of the fixed target line 401, that is, cannot adjust the movement, deformation, and rotation, etc. of the fixed target line 401. Optionally, a prompt message such as "Once the finger leaves the screen, the line will be fixed and can no longer be adjusted" may be displayed on the screen to prompt the user not to allow the finger to leave the screen until the drawn line meets the user's expectations.

Then, the following step S13 may be continued to be executed.

In step S13 (dividing step), the operable area is divided based on the target line.

In this exemplary implementation, since the drawn target line passes through the operable area, the operable area should be able to be divided into two parts via the target line, so the operable area can be divided via the target line.

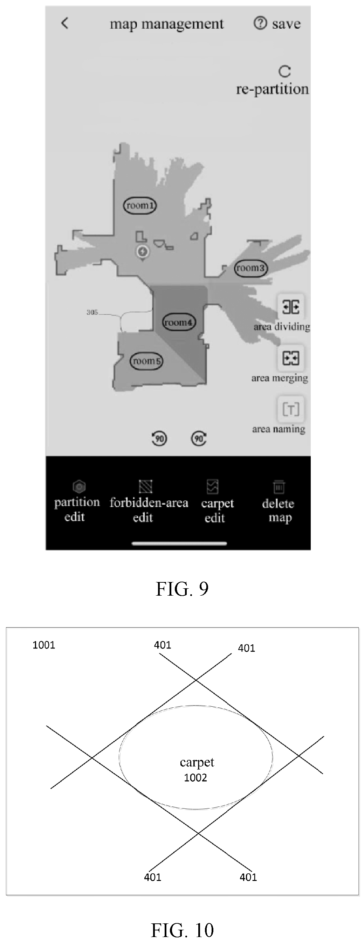

For example, referring to FIG. 9, after the drawn target line 401 is fixed, the operable area 305 is divided based on the target line 401, to obtain divided areas, namely, a room 4 and a room 5.

According to this exemplary implementation, when a touch operation of a user on a screen displaying a graphical representation of a map including an operable area is detected, a drawing operation corresponding to the touch operation is executed to draw a target line passing through the operable area and fix the target line, and then the operable area is divided based on the target line. Therefore, compared with the prior art in which region segmentation is performed by forming a polygon using an intersection of a plurality of rectangles (an area to be divided into is framed by drawing a rectangle on an operable area of a map, which is convenient for a case in which a rectangular area is to be divided into, but is difficult to be applied to a case in which the area to be divided into is an irregular graphic), the present disclosure performs region segmentation by using a target line drawn by a drawing operation corresponding to a touch operation of a user on a screen on which a graphical representation is displayed, so that region segmentation can be performed without being limited by a shape of an area to be divided (an operable area) while improving convenience and intuitiveness of operation, thereby enabling region segmentation even for areas with irregular shapes such as rooms.

In a possible implementation, the drawing step S12 may include: executing the drawing operation once to draw one target line, and forming an enclosed area by the drawn target line and a boundary of at least one operable area. Correspondingly, the operable area may be divided based on the enclosed area.

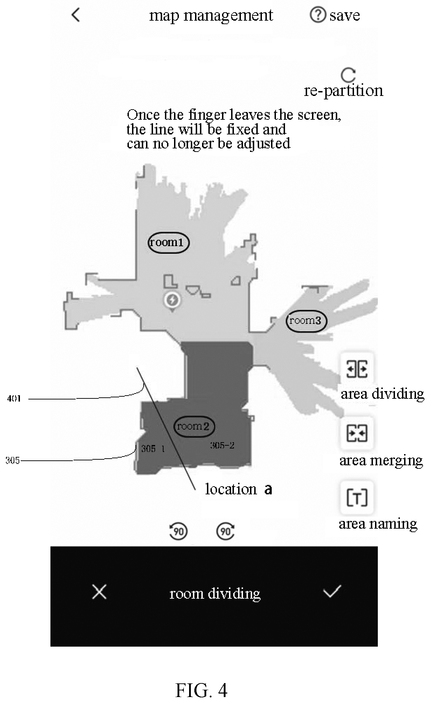

In this exemplary implementation, as shown in FIG. 4, the user only performs one touch operation on the screen on which the graphical representation is displayed, and executing one drawing operation corresponding to the one touch operation may draw one target line 401 passing through the operable area 305, wherein the target line 401 and the boundary of the operable area 305 form enclosed areas 305-1 and 305-2. Correspondingly, the operable area 305 may be divided based on the enclosed areas 305-1 and 305-2.

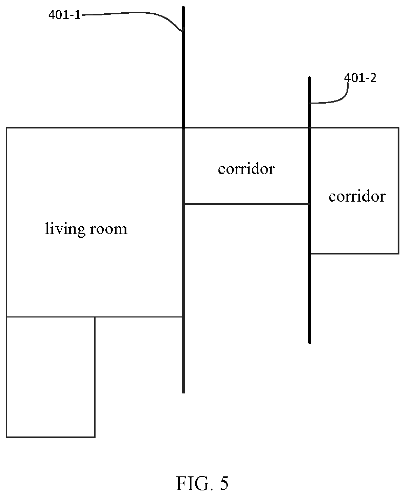

In a possible implementation, the drawing step S12 may include: executing the drawing operation twice to draw two different target lines, and forming an enclosed area by two drawn target lines and a boundary of at least one operable area. Correspondingly, the operable area may be divided based on the enclosed area. In this exemplary implementation, as shown in FIG. 5, the user performs two touch operations on the screen on which the graphical representation is displayed, and executing two drawing operations corresponding to the two touch operations may draw two target lines 401-1 and 401-2 (that is, a division line 1 and a division line 2) that pass through the operable area, wherein the two target lines 401-1 and 401-2 and a boundary of the operable area form three enclosed areas: a living room, a corridor, and a bedroom. Correspondingly, the operable area may be divided based on the three enclosed areas.

It should be understood that, for the convenience of describing the present exemplary implementation, one or two target lines are drawn through the drawing step as an example for description, however, in practice, the number of target lines drawn through the drawing step may be adjusted according to actual application scenarios and requirements, for example, more than three drawing operations may be executed to draw more than three target lines according to the operable area to be divided and/or the shape of the area to be divided into.

In a possible implementation, the touch operation comprises: touching a first location point on the screen, and moving a touch point from the first location point to a second location point while maintaining the touch on the screen; and correspondingly, drawing the target line based on the touch operation comprises: drawing the target line based on a moving track of the touch operation, wherein the first location point and the second location point respectively correspond to a start point and an end point of the target line. Those skilled in the art can understand that the drawn target line may be a straight line or a curve according to different moving tracks. If the moving track is a straight line, the target line drawn based on the moving track is also a straight line; if the moving track is a curve, the target line drawn based on the moving track is also a curve.

Exemplarily, a finger of the user touches at a first location point on the screen on which the graphical representation is displayed, and then the finger slides forward until reaching a second location point on the screen, so that the target line can be drawn based on the sliding track of the finger, it should be understood that the sliding track passes through the operable area.

In a possible implementation, the touch operation comprises: touching a first location point and a second location point on the screen, and correspondingly, the drawing step S12 may include: drawing a line connecting the first location point and the second location point as the target line, wherein the first location point and the second location point respectively correspond to a start point and an end point of the target line.

For example, the finger of the user touches at a first location point on the screen on which the graphical representation is displayed, then lifts the finger, and then touches at a second location point on the screen, so that the target line can be drawn based on a line formed by connecting the first location point and the second location point, and it should be understood that the line formed by connecting the first location point and the second location point passes through the operable area. The drawn target line may be a straight line or a curve. For example, the target line corresponding to the selected type may be drawn according to the type of the target line selected by the user, wherein the type of the target line includes a straight line and a curve.

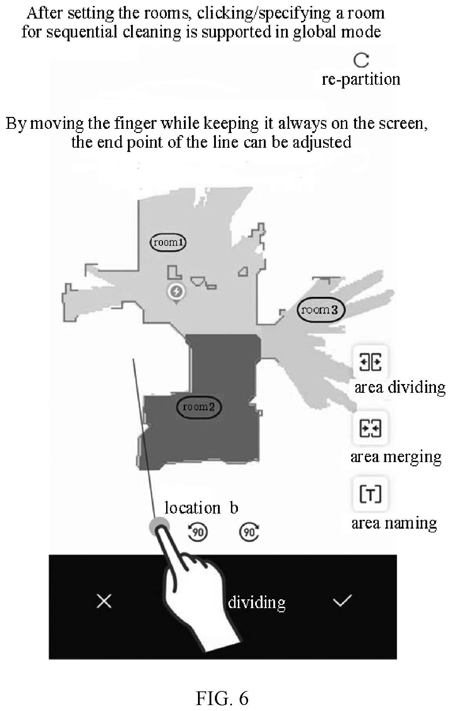

In a possible implementation, when the target line is drawn based on the moving track of the touch operation, as shown in FIG. 6, the user performs, by using a finger, the touch operation on the screen on which the graphical representation is displayed, and during a period in which the finger remains on the screen, the drawn line may be adjusted by sliding the finger arbitrarily with a start point of the touch operation as a circle center, for example, moving an end point of the line from a location a in FIG. 4 to a location b in FIG. 6.

Optionally, as shown in FIG. 6, guidance information such as "You can adjust the end point of the line by moving your finger while keeping it on the screen" may be displayed on the screen to prompt the user to flexibly adjust the location of the target line as needed during the drawing of the target line.

In a possible implementation, if the drawn target line needs to be adjusted, the target line having been drawn is deleted, and the drawing operation is re-executed to re-draw a new target line.

In this exemplary implementation, considering that the fixed target line cannot be adjusted, but there is a case where the drawn target line is not the actually required target line due to an operation error or a demand change, and thus the fixed target line needs to be adjusted, in this case, the fixed target line may be deleted, and then the drawing operation is re-executed to re-draw a new target line.

In a possible implementation, in response to the end of the touch operation, it is determined whether to fix the first target line drawn based on the touch operation; when it is determined to fix the first target line, the first target line is fixed; and when it is determined not to fix the first target line, if another touch operation is detected, the first target line is deleted, and the drawing operation is re-executed based on the another touch operation.

In this exemplary implementation, when the touch operation is ended, a target line drawn based on the touch operation is correspondingly displayed on the screen, and the user may consider whether the target line is suitable (whether the user is satisfied with the target line), and give the control apparatus a corresponding instruction based on whether the target line is suitable, for example, may give the control apparatus a positive indication that the target line is suitable, and a new target line does not need to be re-drawn, or a negative indication that the target line is unsuitable, and a new target line needs to be re-drawn, etc.. Therefore, whether the target line drawn based on the touch operation needs to be fixed may be determined according to the received user instruction; if a positive instruction is received, it is determined that the drawn target line needs to be fixed, and correspondingly, the target line may be fixed; on the contrary, if a negative instruction is received, it may be further detected whether the user re-performs a touch operation on the screen on which the graphical representation is displayed, and if a touch operation re-performed is detected, the target line having been drawn is deleted, and a new target line is re-drawn based on the touch operation re-performed.

In a possible implementation, the drawing operation further includes: if the drawn target line passes through an obstacle located in the operable area, adjusting the drawn target line to a new target line that does not pass through the obstacle.

In this exemplary implementation, considering that there may be an obstacle in the operable area, the autonomous mobile apparatus needs to perform processing such as obstacle avoidance processing and bypass processing on the obstacle, and therefore, if the drawn target line passes through the obstacle, on the one hand, the graphical display of the map is not coordinated, and on the other hand, if the operable area is divided based on the target line passing through the obstacle, it is equivalent to dividing the obstacle as a whole, which is obviously inappropriate, thus, the drawn target line needs to be adjusted so that it does not pass through the obstacle. Thus, the coordination of the graphical display can be maintained while preventing improper dividing.

In a possible implementation, adjusting the drawn target line to a new target line that does not pass through the obstacle includes at least one of the following: (1) rotating the drawn target line with the start point of the target line as a center while keeping a shape of the target line unchanged, until a new target line that is entirely located on one side of the obstacle is drawn; (2) adjusting the drawn target line along a boundary of the obstacle, until a new target line that has a same shape as the boundary of the obstacle and is located on one side of the obstacle is drawn; and (3) keeping a start point and an end point of the drawn target line unchanged, and adjusting a bending degree of the target line, so that the new target line avoids the obstacle in a form of a curve.

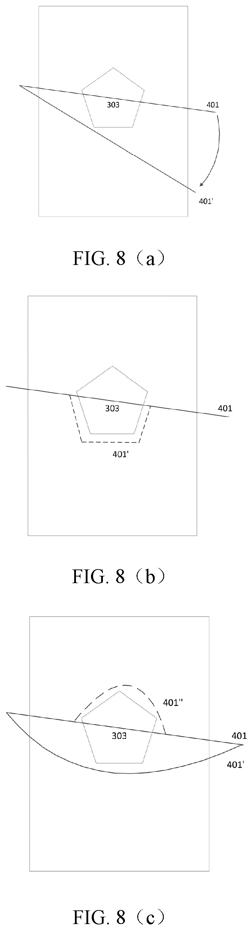

For the above (1), as shown in FIG. 8(a), in the case where the drawn target line 401 passes through the obstacle 303, the shape of the target line 401 is kept unchanged, and the target line 401 is rotated with its start point as the center until a new target line 401' that is entirely located on one side of the obstacle 303 (thereby avoiding the obstacle 303) is drawn. Although FIG. 8(a) shows that the target line 401 rotates clockwise to a new target line 401' those skilled in the art can understand that the target line 401 may also rotate counterclockwise, thereby forming a new target line entirely located on the other side of the obstacle 303.

For the above (2), as shown in FIG. 8(b), in the case where the drawn target line 401 passes through the obstacle 303, the target line 401 is adjusted along the boundary of the obstacle 303 until a new target line 401' having the same shape as the boundary of the obstacle 303 and located on one side of the obstacle 303 is drawn. For ease of representation, in FIG. 8(b), only a part of the new target line 401' that does not coincide with the target line 401 is shown in a dashed line. Those skilled in the art can understand that the part of the new target line 401' not shown in the dashed line coincides with the part of the target line 401 not passing through the obstacle 303. Although FIG. 8(b) shows that the new target line 401' bypasses the obstacle 303 from below the obstacle, those skilled in the art can understand that the new target line 401' may also bypass the obstacle 303 from above the obstacle.

For the above (3), as shown in FIG. 8(c), when the drawn target line 401 passes through the obstacle 303, the start point and the end point of the target line 401 are kept unchanged, and the bending degree of the target line 401 is adjusted, so that the new target line 401' avoids the obstacle 303 in the form of a curve. Although FIG. 8(c) shows that the new target line 401' bypasses the obstacle 303 from below the obstacle, those skilled in the art can understand that the new target line 401' may also bypass the obstacle 303 from above the obstacle. In addition, although FIG. 8(c) shows the overall adjustment of the bending degree between the start point and the end point of the target line 401, those skilled in the art can understand that the bending degree can also be adjusted only for the part of the target line 401 passing through the obstacle 303, so as to form a target line indicated by the new target line 401" shown in dashed lines in FIG. 8(c), and the target line 401" coincides with the target line 401 on both sides of the obstacle 303, and only the part of the target line 401 passing through the obstacle 303 is adjusted.

In a possible implementation, after the operable area is divided based on the drawn target line, the drawn target line may be deleted.

For example, as shown in FIG. 9, after the operable area 305 is divided into the room 4 and the room 5 based on the target line 401, the target line 401 may be deleted from the screen, and only the boundary between the room 4 and the room 5 is retained.

In a possible implementation, after the operable area is divided based on the drawn target line, the divided area may be displayed in a visually distinguishable manner. In this exemplary implementation, after the operable area is divided, the divided area may be displayed differently to improve the recognition of the divided area.

In a possible implementation, the visually distinguishable manner includes marking a divided area with at least one of a color, a character, a curve, a graphic, an icon, a key, a floating box, and an image file.

For example, as shown in FIG. 9, after the operable area 305 is divided into the room 4 and the room 5 based on the target line 401, the room 4 and the room 5 may be respectively filled with different colors, so as to display the room 4 and the room 5 differently.

In a possible implementation, after the operable area is divided based on the drawn target line, at least two adjacent areas selected by the user from the divided areas may be obtained; and the at least two adjacent areas are merged to eliminate a boundary between the at least two adjacent areas.

In this exemplary implementation, after the operable area is divided, the user may select some adjacent areas from the divided areas, and merge the selected adjacent areas into a larger area, thereby performing more appropriate processing on the merged area.

In a possible implementation, after the at least two adjacent areas are merged, in response to detecting a first touch operation of the user on a merged area, a drawing operation is executed to draw a first target line, and in response to an end of the first touch operation, the merged area is divided based on the first target line.

In this exemplary implementation, the drawing step S12 and the dividing step S13 may be re-executed on the merged larger area. Thus, the merged area (obtained by merging the divided areas) can be divided again.

In a possible implementation, after the operable area is divided based on the drawn target line, a divided area selected by the user is obtained; and a cleaning task for the obtained area is created.

In this exemplary implementation, after the operable area is divided, the user may select an area to be cleaned from the divided area, and may create a cleaning task for the area to be cleaned, so that the autonomous mobile apparatus may execute the cleaning task to clean the area to be cleaned.

For example, as shown in FIG. 9, after the operable area 305 is divided into the room 4 and the room 5 based on the target line 401, the user may select the room 4 and the room 5 and set different cleaning modes for the room 4 and the room 5, thereby creating cleaning tasks corresponding to the selected cleaning modes for the rooms 4 and 5.

### Implementation 2:

In Implementation 1, the present disclosure divides the operable area by drawing a target line passing through the operable area. In contrast, Implementation 2 considers dividing into desired areas within the operable area. For example, as shown in FIG. 10, consider a situation where there is a carpet 1002 inside the operable area 1001 and the user wishes to take a different cleaning mode for the carpet 1002 than the rest of the operable area (e.g., take a carpet cleaning mode for the carpet 1002 and a floor cleaning mode for the rest). In this case, the user may wish to divide the operable area 1001 into an area that includes carpet and an area that does not include carpet. At this time, if the dividing is performed by drawing the target line passing through the operable area 1001, since the drawn target line and the boundary of the operable area 1001 form a plurality of enclosed areas, the operable area 1001 will be divided into an area including the carpet and a plurality of areas not including the carpet, which may be inconsistent with the user's expectations. The same needs also exist in a situation where a user wishes to divide into one or more irregular areas within the operable area, or wishes to divide the irregular areas inside the operable area.

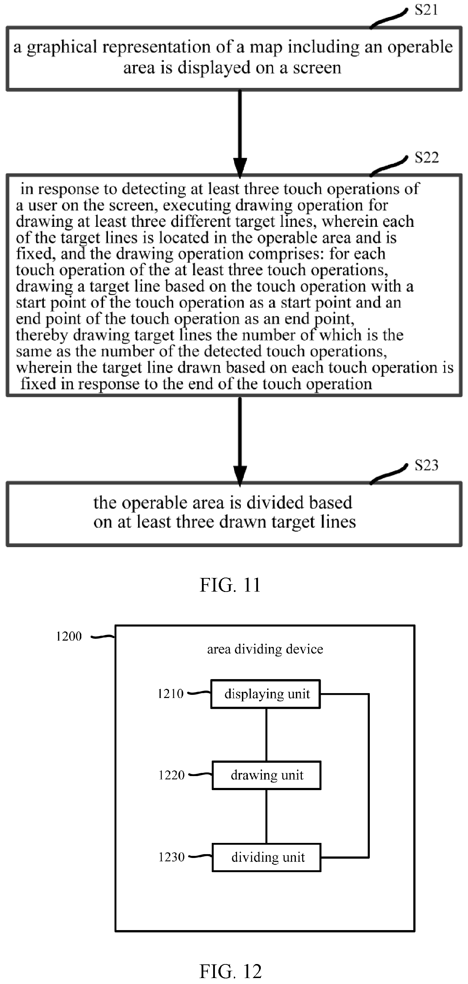

In view of this, the present disclosure provides Implementation 2. Referring to FIG. 11, the region segmentation method includes the following steps.

In step S21 (displaying step), a graphical representation of a map including an operable area is displayed on a screen.

In step S22 (drawing step), in response to detecting at least three touch operations of a user on the screen, executing a drawing operation for drawing at least three different target lines, wherein each of the target lines is located in the operable area and is fixed, and the drawing operation comprises: for each touch operation of the at least three touch operations, drawing a target line based on the touch operation with a start point of the touch operation as a start point and an end point of the touch operation as an end point, so that drawing target lines the number of which is the same as the number of the detected touch operations, wherein the target line drawn based on each touch operation is fixed in response to an end of the touch operation.

In step S23 (dividing step), the operable area is divided based on at least three drawn target lines.

Regarding steps S21 and S23, the related descriptions of steps S11 and S13 in Implementation 1 can be referred to, and the description thereof will not be repeated herein.

It should be understood that the difference between the drawing step S22 and the drawing step S12 mainly lies in that: the target line drawn in the drawing step S12 may be one, two or more than three, in other words, the number of the drawn target lines in Implementation 1 is not specifically limited, and the drawn target line must pass through the operable area; on the contrary, the target line drawn in the drawing step S22 must be more than three, in other words, Implementation 2 excludes the implementation that the number of the drawn target lines is one or two, and the drawn target line is located in the operable area rather than passing through the operable area. That the target line is located in the operable area includes that all of the target line is located in the operable area or one endpoint of the target line is located at a boundary of the operable area and all of the part other than the endpoint is located in the operable area.

According to this exemplary implementation, it is able to divide into one or more irregular areas within the operable area or to divide the irregular areas inside the operable area in a flexible manner.

Exemplarily, as shown in FIG. 10, by drawing four target lines 401 located in the operable area 1001 and dividing the operable area 1001 based on four drawn target lines 401, the carpet located in the operable area 1001 is included in one of the divided areas. Moreover, since the four target lines 401 do not intersect with the boundary of the operable area 1001, and thus do not form an enclosed area with the boundary of the operable area 1001, dividing the operable area based on the four target lines 401 would divide into only the enclosed area formed by the four target lines 401 (that is, the area surrounding the carpet 1002) and other areas except this area, instead of dividing into other areas formed by the target lines 401 and the boundary of the operable area 1001, and such areas are not desired by the user. It can be seen that according to Implementation 2 of the present disclosure, it is possible to divide into one or more irregular areas within the operable area or to divide the irregular areas inside the operable area in a flexible manner.

Referring to FIG. 12, the region segmentation device 1200 may include a displaying unit 1210, a drawing unit 1220, and a dividing unit 1230. The displaying unit 1210 is configured to display a graphical representation of a map including an operable area on a screen. The drawing unit 1220 is connected to the displaying unit 1210, and is configured to execute, in response to detecting a touch operation of a user on the screen, a drawing operation for drawing a target line, wherein the target line passes through the operable area and is fixed, and the drawing operation comprises: drawing the target line based on the touch operation with a start point of the touch operation as a start point and an end point of the touch operation as an end point, wherein the target line is fixed in response to an end of the touch operation. The dividing unit 1230 is connected to the drawing unit 1220 and the displaying unit 1210, and is configured to divide the operable area based on the target line, and display a division result on the displaying unit 1210.

In a possible implementation, the drawing unit 1220 is configured to execute drawing operation once to draw one target line, and form an enclosed area by the drawn target line and a boundary of at least one operable area; and correspondingly, the dividing unit 1230 is configured to divide the operable area based on the enclosed area.

In a possible implementation, the drawing unit 1220 is configured to execute drawing operation twice to draw two different target lines, and form an enclosed area by two drawn target lines and a boundary of at least one operable area; and correspondingly, the dividing unit 1230 is configured to divide the operable area based on the enclosed area.

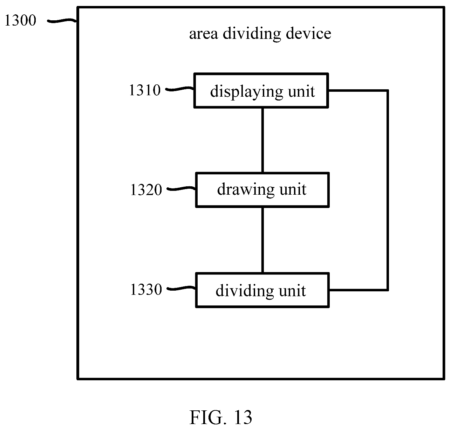

Referring to FIG. 13, the region segmentation device 1300 may include a displaying unit 1310, a drawing unit 1320, and a dividing unit 1330. The displaying unit 1310 is configured to display a graphical representation of a map including an operable area on a screen. The drawing unit 1320 is connected to the displaying unit 1310, and is configured to execute, in response to detecting at least three touch operations of a user on the screen, a drawing operation for drawing at least three different target lines, wherein each of the target lines is located in the operable area and is fixed, and the drawing operation comprises: for each touch operation of the at least three touch operations, drawing a target line based on the touch operation with a start point of the touch operation as a start point and an end point of the touch operation as an end point, so that drawing target lines the number of which is the same as the number of the detected touch operations, wherein the target line drawn based on each touch operation is fixed in response to an end of the touch operation. The dividing unit 1330 is connected to the drawing unit 1320 and the displaying unit 1310, and is configured to divide the operable area based on the drawn at least three target lines, and display a division result on the displaying unit 1310.

In a possible implementation, an enclosed area is formed by the at least three target lines, or an enclosed area is formed by the at least three target lines and a boundary of the operable area, and correspondingly, the dividing unit 1330 is configured to divide the operable area based on the enclosed area.

In a possible implementation, the touch operation related to the region segmentation device 1200/1300 includes: touching a first location point on the screen, and moving the touch point from the first location point to a second location point while maintaining the touch on the screen; and correspondingly, the drawing unit 1220/1320 draws the target line based on a moving track of the touch operation, wherein the first location point and the second location point respectively correspond to a start point and an end point of the target line.

In a possible implementation, the touch operation related to the region segmentation device 1200/1300 includes: the touch operation comprises: touching a first location point and a second location point on the screen, and correspondingly, the drawing unit 1220/1320 draws a line connecting the first location point and the second location point as the target line, wherein the first location point and the second location point respectively correspond to a start point and an end point of the target line.

In a possible implementation, the region segmentation device 1200/1300 may further include a deleting unit (not shown), and the deleting unit is configured to delete the drawn target line after the dividing unit 1230/1330 has divided the operable area.

In a possible implementation, for the region segmentation device 1200/1300, if the drawn target line needs to be adjusted, the region segmentation device 1200/1300 deletes the target line having been drawn, and the drawing unit 1220/1320 re-executes the drawing operation to re-draw a new target line.

In a possible implementation, the region segmentation device 1200/1300 may further include: a determining unit (not shown) configured to determine, in response to an end of the touch operation, whether to fix the first target line drawn based on the touch operation; and a control unit (not shown) configured to, when the determining unit determines to fix the first target line, fix the first target line, and when the determining unit determines not to fix the first target line, delete the first target line if another touch operation is detected and cause the drawing unit 1220/1320 to re-execute the drawing operation based on the another touch operation.

In a possible implementation, the displaying unit 1210/1310 is further configured to display the divided area in a visually distinguishable manner.

In a possible implementation, the visually distinguishable manner includes marking a divided area with at least one of a color, a character, a curve, a graphic, an icon, a key, a floating box, and an image file.

In a possible implementation, the region segmentation device 1200/1300 may further include: an obtaining unit (not shown) configured to obtain at least two adjacent areas selected by the user from the divided areas; and a merging unit (not shown) configured to merge the at least two adjacent areas to eliminate a boundary between the at least two adjacent areas.

In a possible implementation, the drawing unit 1220/1320 is further configured to: in response to detecting a first touch operation of the user on the merged area, execute the drawing operation to draw a first target line; and correspondingly, the dividing unit 1230/1330 is further configured to: in response to an end of the first touch operation, divide the merged area based on the first target line.

In a possible implementation, the drawing operation executed by the drawing unit 1220/1320 further includes: if the drawn target line passes through an obstacle located in the operable area, adjusting the drawn target line to a new target line that does not pass through the obstacle.

In a possible implementation, adjusting the drawn target line to a new target line that does not pass through the obstacle includes at least one of the following: rotating the drawn target line with the start point of the target line as a center while keeping a shape of the target line unchanged, until a new target line that is entirely located on one side of the obstacle is drawn; adjusting the drawn target line along a boundary of the obstacle, until a new target line that has a same shape as the boundary of the obstacle and is located on one side of the obstacle is drawn; and keeping a start point and an end point of the drawn target line unchanged, and adjusting a bending degree of the target line, so that the new target line avoids the obstacle in a form of a curve.

In a possible implementation, the region segmentation device 1200/1300 may further include: an obtaining unit (not shown) configured to obtain a divided area selected by the user; and a creating unit (not shown) configured to create a cleaning task for the obtained area.

In a possible implementation, the target line is a straight line and/or a curve.

In a possible implementation, in response to the moving track of the touch operation being a straight line, the target line is a straight line.

In this exemplary implementation, as shown in FIG. 1, the control apparatus 120 is provided with a screen 122, and certainly, the control apparatus 120 may further include a region segmentation device 1200/1300. Regarding the screen 122 and the region segmentation device 1200/1300, the foregoing description may be referred to, and the description thereof will not be repeated herein.

Regarding the device in the above implementations, the specific manner in which each unit executes operations has been described in detail in the implementations related to the method, and will not be described in detail here.

Implementations of the present disclosure have been described above, and the above description is exemplary, not exhaustive, and is not limited to the disclosed implementations. Many modifications and variations will be apparent to those of ordinary skill in the art without departing from the scope and spirit of the described implementations. The terminology used herein was chosen to best explain the principles of the implementations, the practical application or technical improvement over technologies found in the marketplace, or to enable others of ordinary skill in the art to understand the implementations disclosed herein.

## Claims

1. A region segmentation method applied to a control device, comprising:
a displaying step for displaying a graphical representation of a map including an operable region on a screen;
a drawing step for executing, in response to detecting a touch operation of a user on the screen, a drawing operation for drawing a target line, wherein the target line passes through the operable region and is fixed, and the drawing operation comprises: drawing the target line based on the touch operation with a start point of the touch operation as a start point and an end point of the touch operation as an end point, wherein the target line is fixed in response to an end of the touch operation; and
a segmenting step for segmenting the operable region based on the target line.

2. The region segmentation method according to claim 1, wherein
the drawing step comprises: executing the drawing operation once to draw one target line, and forming an enclosed region by a drawn target line and a boundary of at least one operable region, and accordingly, the segmenting step comprises segmenting the operable region based on the enclosed region; or
the drawing step comprises: executing the drawing operation twice to draw two different target lines, and forming an enclosed region by two drawn target lines and a boundary of at least one operable region, and accordingly, the segmenting step comprises segmenting the operable region based on the enclosed region.

3. A region segmentation method applied to a control device, comprising:
a displaying step for displaying a graphical representation of a map including an operable region on a screen;
a drawing step for executing, in response to detecting at least three touch operations of a user on the screen, a drawing operation for drawing at least three different target lines, wherein each of the target lines is located within the operable region and is fixed, and the drawing operation comprises: for each touch operation of the at least three touch operations, drawing a target line based on the touch operation with a start point of the touch operation as a start point and an end point of the touch operation as an end point, thereby drawing target lines, such that a number of drawn target lines corresponds to a number of detected touch operations, wherein the target line drawn based on each touch operation is fixed in response to an end of the touch operation; and
a segmenting step for segmenting the operable region based on at least three drawn target lines.

4. The region segmentation method according to claim 3, wherein
an enclosed region is formed by the at least three target lines, or the enclosed region is formed by the at least three target lines and the boundary of the operable region, and accordingly,
the segmenting step comprises segmenting the operable region based on the enclosed region.

5. The region segmentation method according to any one of claims 1 to 4, wherein
the touch operation comprises: touching a first location point on the screen, and moving a touch point from the first location point to a second location point while maintaining the touch on the screen, and accordingly, drawing the target line based on the touch operation comprises: drawing the target line based on a movement trajectory of the touch operation, wherein the first location point and the second location point respectively correspond to a start point and an end point of the target line; or
the touch operation comprises: touching a first location point and a second location point on the screen, and accordingly, drawing the target line based on the touch operation comprises: drawing a line connecting the first location point and the second location point as the target line, wherein the first location point and the second location point respectively correspond to a start point and an end point of the target line.

6. The region segmentation method according to any one of claims 1 to 4, further comprising:
determining whether to fix the first target line drawn based on the touch operation in response to an end of the touch operation,
fixing the first target line in response to determining that the first target line is to be fixed;
in response to determining that the first target line is not to be fixed, in a case that another touch operation is detected, deleting the first target line, and re-executing the drawing operation based on another touch operation.

7. The region segmentation method according to any one of claims 1 to 4, wherein after the segmenting step, the region segmentation method further comprises:
deleting the drawn target line; or
displaying the segmented regions in a visually distinguishable manner, the visually distinguishable manner includes marking the segmented region with at least one of a color, a character, a curve, a graphic, an icon, a button, a floating frame, and an image file; or
an obtaining step for obtaining at least two adjacent regions selected by a user from segmented regions, and a merging step for merging the at least two adjacent regions to eliminate a boundary between the at least two adjacent regions, wherein after the merging step, the region segmentation method further comprises: executing the drawing operation to draw a first target line in response to detecting a first touch operation of the user on the merged region, and segmenting the merged region based on the first target line in response to an end of the first touch operation.

8. The region segmentation method according to any one of claims 1 to 4, wherein
the drawing operation further comprises: in a case that the target line drawn passes through an obstacle located in the operable region, adjusting the drawn target line to a new target line that does not pass through the obstacle, wherein adjusting the drawn target line to a new target line that does not pass through the obstacle comprises at least one of the following:
rotating the drawn target line with the start point of the target line as the center while keeping a shape of the target line unchanged, until a new target line entirely located on one side of the obstacle is drawn;
adjusting the drawn target line along a boundary of the obstacle, until a new target line that maintains a same shape as the boundary of the obstacle and is located on one side of the obstacle is drawn; and
keeping the start point and the end point of the drawn target line unchanged, and adjusting a curvature of the target line whereby a new target line avoids the obstacle in a form of a curve.

9. The region segmentation method according to any one of claims 1 to 4, further comprising:
obtaining a segmented region selected by a user;
creating a cleaning task for the obtained region.

10. The region segmentation method according to claim 5, wherein
in response to the movement trajectory of the touch operation being a straight line, the target line is a straight line.

11. A region segmentation apparatus applied to a control device, comprising:
a displaying unit configured to display a graphical representation of a map including an operable region on a screen;
a drawing unit configured to execute, in response to detecting a touch operation of a user on the screen, a drawing operation for drawing a target line, wherein the target line passes through the operable region and is fixed, and the drawing operation comprises: drawing the target line based on the touch operation with a start point of the touch operation as a start point and an end point of the touch operation as an end point, wherein the target line is fixed in response to an end of the touch operation; and
a segmenting unit configured to segment the operable region based on the target line.

12. A region segmentation apparatus applied to a control apparatus, comprising:
a displaying unit configured to display a graphical representation of a map including an operable region on a screen;
a drawing unit configured to execute, in response to detecting at least three touch operations of a user on the screen, a drawing operation for drawing at least three different target lines, wherein each of the target lines is located within the operable region and is fixed, and the drawing operation comprises: for each touch operation of the at least three touch operations, drawing a target line based on the touch operation with a start point of the touch operation as a start point and an end point of the touch operation as an end point, thereby drawing target lines, such that a number of drawn target lines corresponds to a number of detected touch operations, wherein the target line drawn based on each touch operation is fixed in response to an end of the touch operation; and
a segmenting unit for segmenting the operable region based on at least three drawn target lines.

13. A region segmentation apparatus applied to a control device, comprising:
a processor;
a memory for storing processor-executable instructions;
wherein the processor is configured to implement the region segmentation method according to any one of claims 1 to 10 when executing the instructions stored in the memory.

14. A control device, comprising a screen and the region segmentation apparatus according to any one of claims 11 to 13.

15. A non-transitory computer-readable storage medium having computer program instructions stored thereon, wherein the computer program instructions, when executed by a processor, implement the region segmentation method according to any one of claims 1 to 10.
